# EUROPÄISCHE PATENTSCHRIFT

(11) **EP 1 375 242 B1**
(45) Veröffentlichungstag und Bekanntmachung des Hinweises auf die Patenterteilung: **23.04.2008**
(21) Anmeldenummer: 03013897.8
(22) Anmeldetag: 20.06.2003
(51) Int. Cl.: B60N 2/36, B60N 2/30

(54) **Fahrzeug mit faltbarem Rücksitz**
Vehicle with foldable rear seat
Véhicule avec siège arrière pliant

(30) Priorität: 26.06.2002 DE 10228465
(43) Veröffentlichungstag der Anmeldung: 02.01.2004
(73) Patentinhaber: Bayerische Motoren Werke Aktiengesellschaft, 80809 München (DE)
(72) Erfinder: Kamphaus, Reinhard, 85049 Ingoldstadt (DE); Sohn, Ute Dora, 82515 Wolfratshausen (DE); Geus, Jürgen, 80992 München (DE)

(56) Entgegenhaltungen:
- WO-A-99/08894
- DE-A1- 19 616 070
- DE-C1- 19 962 424
- DE-U1- 29 715 345

## Beschreibung

Die Erfindung betrifft ein Kraftfahrzeug gemäß dem Oberbegriff des Anspruchs 1.

Es ist bereits ein Kraftfahrzeug bekannt, bei dem die Rücksitze aus einer Sitzposition in eine Ladeposition und zurück verstellbar sind.

Ferner sind Kraftfahrzeuge bekannt, bei denen zwischen einer Sitzfläche eines Rücksitzes und eines darunter befindlichen Bodens einer Karosserie ein Zwischenraum ausgebildet ist, der beispielsweise als Stauraum verwendbar ist.

Aus der WO 99/08894 A ist ein gattungsbildendes Fahrzeug mit mindestens einem Rücksitz bekannt. Zwischen einem Bodenblech einer Karosserie und einer Sitzfläche des Rücksitzes ist eine Verriegelungsvorrichtung vorgesehen, die die Sitzfläche in der Sitzposition verriegelt. Die Verriegelungsvorrichtung weist eine Stange auf, über die die Sitzfläche nicht nur in eine Ladeposition gesenkt oder in eine Sitzposition angehoben wird, sondern über die auch die Sitzfläche verriegelt wird.

Aus der DE 196 16 070 A1 ist ein Kraftfahrzeugsitz bekannt, bei dem eine Rückenlehne aus einer Sitzposition in eine Ladeposition nach vorne klappbar ist. In der Ladeposition befindet sich die Lehnenrückseite zumindest in einer im Wesentlichen horizontalen Lage. Dieser Kraftfahrzeugsitz weist eine Verriegelungseinrichtung und eine Übertragungseinrichtung auf. Über die Übertragungseinrichtung erfolgt bei einer Klappbewegung der Rückenlehne in Richtung der Ladeposition ein Verschwenken der Sitzfläche nach vorne, bis die Sitzfläche sich in der Ladeposition befindet.

Aus der DE 199 62 424 C1 ist ein Kraftfahrzeugsitz mit einem Gestänge zur translatorischen Übertragung von Verstellkräften für Sitzeinstellfunktionen bekannt. Bei einem Vorklappen der Rückenlehne wird das Sitzteil abgesenkt und relativ zu einer Klappachse der Rückenlehne nach vorne verlagert. Das Gestänge ist gegen eine Überlastung gesichert.

Aufgabe der Erfindung ist es, ein Kraftfahrzeug zu schaffen, bei dem die jeweils vorhandenen Rücksitze einfach und sicher verstellbar sind.

Diese Aufgabe wird durch die Merkmale des Anspruchs 1 gelöst.

Bei dem erfindungsgemäßen Kraftfahrzeug ist an dem jeweiligen Rücksitz eine erfindungsgemäße Verriegelungsvorrichtung vorgesehen, die sicherstellt, dass sich eine Sitzfläche des Rücksitzes in der Sitzposition in einem verriegelten Zustand befindet.

Ferner ist die erfindungsgemäße Verriegelungsvorrichtung über Betätigungsmittel und eine Sperrvorrichtung mit einer Rückenlehnen-Verstellvorrichtung so verbunden, dass gleichzeitig mit der Klapp- oder Schwenkbewegung einer Kraftfahrzeug Rückenlehne des Rücksitzes von der Sitzposition in die Ladeposition eine Entriegelung der Sitzfläche erfolgt, so dass die Sitzfläche absenkbar ist.

Vorteilhafterweise ist es aufgrund der Bauweise der erfindungsgemäßen Verriegelungsvorrichtung möglich, dass bei der Verschwenkung der Rückenlehne von der Ladeposition in die Sitzposition erst nach einer vollständigen Verriegelung der Verriegelungsvorrichtung eine Entriegelung der Sperrvorrichtung erfolgt, so dass ein Hochklappen der Rückenlehne in die Sitzposition möglich ist.

In einer vorteilhaften Ausführungsform der erfindungsgemäßen Verriegelungsvorrichtung ist an einem vorderen Ende der Sitzfläche mindestens ein durch eine erste Feder beaufschlagter Hebel angeordnet, der im verriegelten Zustand formschlüssig gehaltert ist. Der Hebel steht in Wirkverbindung mit einer Betätigungseinrichtung, durch die ein Umklappen der Rückenlehne in Richtung auf die Sitzfläche eine Entriegelung des Hebels bewirkt. Der Hebel wird durch die Schwenkbewegung der Rückenlehne gegen die Kraft einer zweiten Feder in eine Entriegelungsposition verlagert. Durch diese Bauweise sind keine zusätzlichen Betätigungsmittel erforderlich.

Vorteilhafterweise erfolgt mit der Entriegelung des vorderen Endes der Sitzfläche eine Verriegelung oder Sperrung des Verstellweges für die Rückenlehne in der Weise, dass die Rückenlehne erst dann aus der Ladeposition in die Sitzposition verstellt werden kann, wenn sich der Verriegelungshebel wieder in der Verriegelungsposition befindet. Dadurch wird eine Verriegelung der Sitzfläche in der Sitzposition sichergestellt.

In einer vorteilhaften Ausführungsform erfolgt die Verriegelung des Verstellweges der Rückenlehne dadurch, dass beim Absenken der Rückenlehnen - Verstellvorrichtung eine Sperrvorrichtung betätigt wird, durch die zusätzlich die Entriegelung des jeweiligen Sitzflächen - Verriegelungshebels erfolgt.

In einer vorteilhaften Ausführungsform ist das Betätigungsmittel für den jeweiligen Sitzflächen - Verriegelungshebels ein Seilzug, der zwischen der Sperrvorrichtung und dem Sitzflächen - Verriegelungshebel angeordnet ist.

Eine Ausführungsform der Erfindung wird nachstehend anhand der Zeichnungen beispielshalber beschrieben. Dabei zeigen:
- Fig. 1: eine Seitenansicht eines schematisch dargestellten Rücksitzes in einer Sitzposition mit einer verriegelten Sitzfläche,
- Fig. 2: eine Seitenansicht des in der Fig. 1 gezeigten Rücksitzes, bei der sich die Rückenlehne in einer Zwischenstellung befindet und die Rückenlehne zusammen mit einem hinteren Ende der Sitzfläche abgesenkt ist,
- Fig. 3: eine Seitenansicht des in der Fig. 1 gezeigten Rücksitzes in einer Ladeposition, bei der durch die Abwärtsbewegung des Rücksitzes gleichzeitig eine Verriegelung des Verstellweges der Rückenlehne nach oben und eine Entriegelung der Sitzfläche über die Sperrvorrichtung erfolgt und
- Fig. 4: eine Seitenansicht des in der Fig. 1 gezeigten Rücksitzes vor einer Entriegelung des Verstellweges der Rückenlehne und einer Verriegelung des vorderen Endes der Sitzfläche.

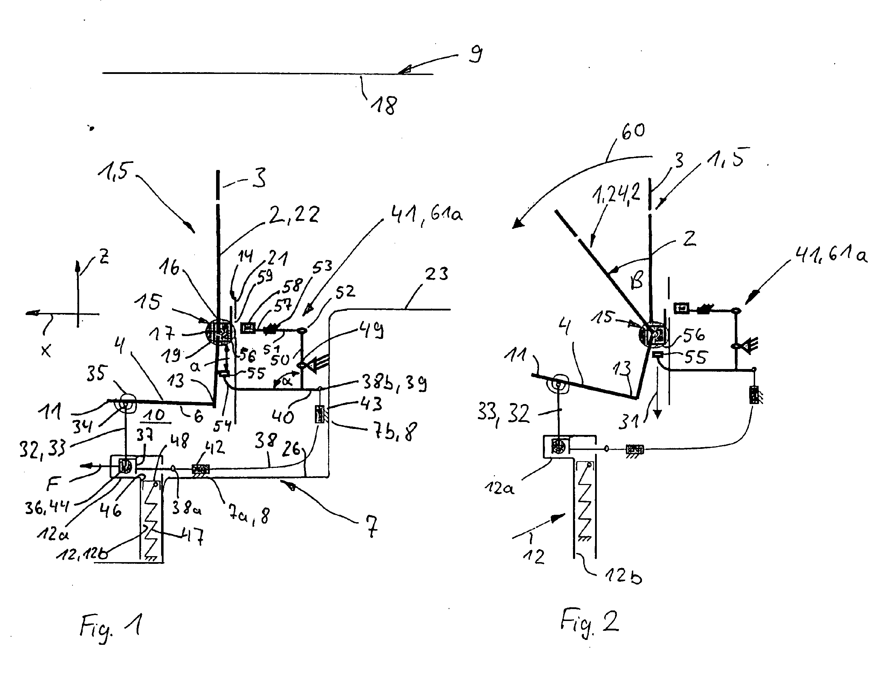

Die Fig. 1 zeigt eine Seitenansicht eines in einem Fahrzeug 9 eingebauten Rücksitzes 1, der eine Rückenlehne 2 mit einer Kopfstütze 3 und einer Sitzfläche 4 aufweist. Der Sitz 1 befindet sich in der in der Fig. 1 gezeigten Darstellung in der Sitzposition 5. Zwischen einer Unterseite 6 der Sitzfläche 4 und einem Bodenblech 7 einer Karosserie des Fahrzeuges 9 ist ein Zwischenraum 10 ausgebildet.

Ein vorderes Ende 11 der Sitzfläche 4 ist über einen Sitzflächen - Verriegelungshebel 32 einer Verriegelungsvorrichtung 33 in der Sitzposition 5 gehaltert. Ein sitzflächenseitiges Ende 34 des Hebels 32 ist an der Unterseite 6 der Sitzfläche 4 gelenkig angeordnet und durch eine Feder 35 so vorgespannt, dass ein karosserieseitiges Ende 36 des Hebels 32 in Fahrzeuglängsrichtung x mit einer Kraft F beaufschlagt ist. Das karosserieseitige Ende 36 des Hebels 32 ist in der gezeigten Ausführungsform über eine im Querschnitt U-förmige Halterungsvorrichtung 37 in der in der Fig. 1 gezeigten Lage festgelegt.

Die Halterungsvorrichtung 37 ist an einem Ende 38a eines Seilzuges 38 befestigt, dessen gegenüberliegendes Ende 38b an einem Ende 39 eines Hebels 40 einer Sperrvorrichtung 41 befestigt ist. Der Seilzug 38 ist über Führungen 42 und 43 an einem unteren, waagrecht verlaufenden Abschnitt 7a und einem dazu senkrechten, oberen Abschnitt 7b des Bodenbleches 7 geführt. Um die Halterungsvorrichtung 37 ist ein oberer Abschnitt 12a einer Führung 12 angeordnet, der nur eine Verschiebbarkeit des karosserieseitigen Endes 36 des Hebels 32 in Fahrzeuglängsrichtung bzw. in der entgegengesetzten Fahrzeuglängsrichtung ermöglicht.

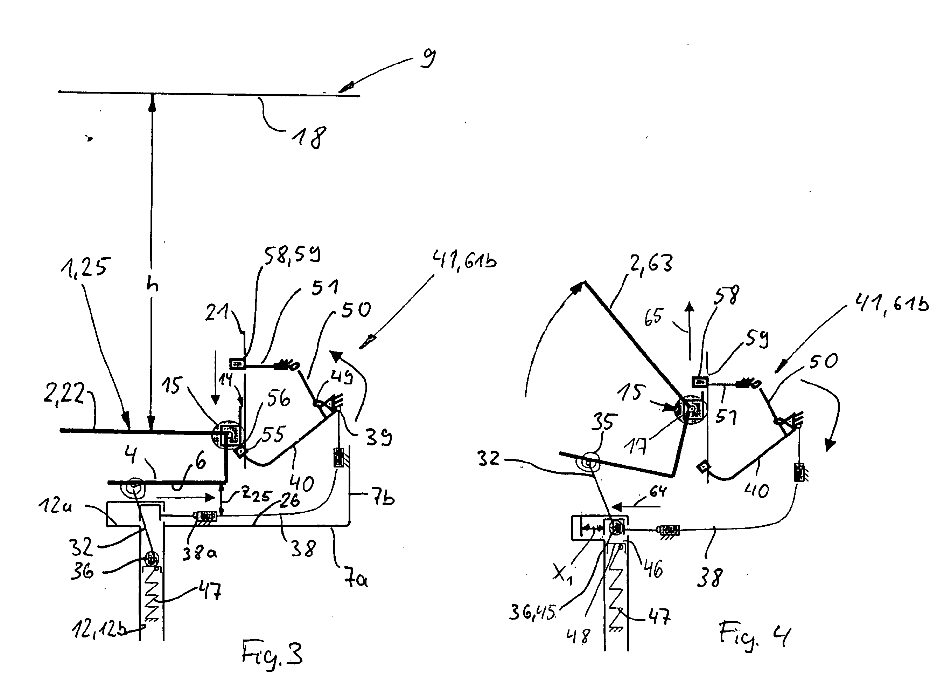

Wird der Verriegelungshebel 32 aus der in der Fig. 1 gezeigten Verriegelungslage 44 über den Seilzug 38 in eine in der Fig. 4 gezeigten Lage 45 um die Strecke x, gezogen, dann befindet sich das karosserieseitige Ende 36 des Hebels 32 vor einer Eintrittsöffnung 46 eines Führungsabschnittes 12b, der in der gezeigten Ausführungsform in vertikaler Richtung z verläuft.

In einer anderen Ausführungsform kann der Führungsabschnitt 12b auch schräg nach unten mit einem x-Anteil verlaufen. In dem Führungsabschnitt 12b ist eine Feder 47 mit einer Auflagefläche 48 angeordnet. Nach einem in der Figur 3 gezeigten Absenken der Sitzfläche 4 in die Ladeposition 25 befindet sich der Verriegelungshebel 32 in dem Führungsabschnitt 12b und spannt dadurch die Feder 47 vor.

In der in der Fig. 1 gezeigten Ausführungsform ist an einem hinteren Ende 13 der Sitzfläche 4 an dem oberen Abschnitt 7b des Bodenbleches 7 eine Führung 14 angeordnet, in die eine Rückenlehnen - Verstellvorrichtung 15 eingreift, die an einem unteren Ende 16 der Rückenlehne 2 angeordnet ist. Die Rückenlehne 2 ist um eine Schwenk- oder Drehachse 17 schwenkbar, die durch die Rückenlehnen - Verstellvorrichtung 15 ausgebildet ist.

In der gezeigten Ausführungsform weist die Rückenlehnen - Verstellvorrichtung15 mindestens ein rotierendes Bauteil 19 auf, das in Eingriff mit einem am Bodenblech 7 befestigten Bauteil 21 steht. In einer Ausführungsform ist das rotierende Bauteil 19 ein Zahnrad, das in Eingriff mit dem als Zahnstange ausgebildeten Bauteil 21 steht. Die Rückenlehne 2 weist eine Rückseite 22 auf, die in einer in der Fig. 3 gezeigten Ladeposition 25 als Ladefläche dienen kann.

In der Fig. 1 schließt sich an die Rückenlehne 2 ein Ladeboden 23 an. Aus Gründen der Darstellung ist die Sperrvorrichtung 41 zwischen dem Bauteil 21 und dem oberen Abschnitt 7b des Bodenbleches 7 dargestellt. In der Regel ist die Sperrvorrichtung 41 in bzw. an einem nicht dargestellten Gehäuse für die Rückenlehnen - Verstellvorrichtung 15 ausgebildet, so dass ein Abstand zwischen der Rückseite 22 der Rückenlehne 2 und dem sich daran anschließenden Ladeboden 23 relativ gering ist und beispielsweise ca. 3 bis 5 cm in Fahrzeuglängsrichtung x beträgt.

Die Sperrvorrichtung 41 weist ein Schwenklager 49 auf, an dem mehrere in Verbindung miteinander stehende Hebel 40, 50, 51 angeordnet sind. In der gezeigten Ausführungsform sind die Hebel 40 und 50 unter einem Winkel α = 90° miteinander befestigt. Zwischen den Hebeln 51 und 50 ist ein Gelenk 52 vorgesehen. Der Hebel 51 ist ferner in einer Führung 53 verschiebbar angeordnet, die die Bewegung des Hebels 51 in Fahrzeuglängsrichtung x festlegt.

An einem der Rückseite 22 der Rückenlehne 2 bzw. dem hinteren Ende 13 der Sitzfläche 4 zugewandten Ende 54 des Hebels 40 ist ein Anschlag 55 ausgebildet, der bei einer Abwärtsbewegung des Sitzes 1 nach einer vorbestimmten Wegstrecke a mit einem Anschlag 56 in Eingriff kommt, der beispielsweise an der Rückenlehnen - Verstellvorrichtung 15 vorgesehen ist.

An einem der Rückseite 22 der Rückenlehne 2 bzw. der Rückenlehnen - Verstellvorrichtung 15 zugewandten Ende 57 des Hebels 51 ist ein Verriegelungsbauteil 58, beispielsweise ein Bolzen, angeordnet. Das Verriegelungsbauteil 58 ist vor einer Durchgangsöffnung 59 angeordnet, die in dem feststehenden Führungsbauteil 21 ausgebildet ist.

Die Fig. 2 zeigt eine Zwischenposition 24 der Rückenlehne 2, bei der die Rückenlehne 2 um einen Winkel β entsprechend einem Pfeil 60 nach vorne in Richtung der Sitzfläche 4 geklappt ist. Die Sperrvorrichtung 41 befindet sich noch in der in der Fig. 1 gezeigten nicht verriegelten Ausgangslage 61a.

Bei einer weiteren Verschwenkung der Rückenlehne 2 wird die Rückenlehne 2 zusätzlich zu dem bereits zurückgelegten Weg in vertikaler Richtung z weiter über die Rückenlehnen - Verstellvorrichtung 15 abgesenkt, so dass der Anschlag 56 in Anlage mit dem Anschlag 55 der Sperrvorrichtung 41 kommt.

In der Fig. 2 zeigt ein Pfeil 31 die Abwärtsbewegung der Rückenlehne 2 sowie des hinteren Endes 13 der Sitzfläche 4 an. Das vordere Ende 11 der Sitzfläche 4 befindet sich ebenfalls wie der Verriegelungshebel 32 noch in der in der Fig. 1 gezeigten Ausgangslage.

Die Fig. 3 zeigt den Sitz 1 in der Ladeposition 25, bei der die Rückseite 22 der Rückenlehne 2 in Bezug zu einem Fahrzeugdach 18 eine maximale Beladehöhe h aufweist. Durch die Abwärtsbewegung des Sitzes 1 erfolgt eine Verschiebung des Anschlages 55 nach unten, so dass sich der Hebel 40 um das Schwenklager 49 dreht.

Durch die Verdrehung des Hebels 40 wird das Hebelende 39 um einen Winkel nach oben verschwenkt, so dass der Seilzug 38 das karosserieseitige Ende 36 des Hebels 32 aus der in der Fig. 1 gezeigten Ausgangssituation in eine in der Fig. 4 gezeigte Zwischenstellung 45 um eine Strecke x, zieht. Gleichzeitig wird das Verriegelungsbauteil 58 über die Hebel 50 und 51 in die Durchgangsöffnung 59 des Führungsbauteiles 21 der Führung 14 gedrückt. Durch das Verriegelungsbauteil 58 wird dadurch ein Verschiebeweg der Rückenlehne 2 bei einer Aufwärtsbewegung der Rückenlehne 2 in die Sitzposition 5 gesperrt.

Beim weiteren Absenken der Sitzfläche 4 wird der Verriegelungshebel 32 mit seinem unteren Ende 36 in den Führungsabschnitt 12b der Führung 12 geschoben. Dabei wird gleichzeitig die in dem Führungsabschnitt 12b befindliche Feder 47 zusammengedrückt. In der in der Fig. 3 gezeigten Ladeposition 25 ist ein senkrechter Abstand z₂₅ zwischen der Unterseite 6 der Sitzfläche 4 und einer Oberseite 26 des Abschnittes 7a des Bodenbleches 7 minimiert.

Die Fig. 4 zeigt bei einer Aufwärtsbewegung der Rückenlehne 2 eine weitere Zwischenposition 63 der Rückenlehne 2, bei der das karosserieseitige Ende 36 des Hebels 32 aufgrund der Kraft der Feder 47 in den oberen, waagrechten Führungsabschnitt 12a bewegt worden ist. Durch die Kraft der Drehfeder 35 wird das karosserieseitige Ende 36 des Hebels 32 in Fahrzeuglängsrichtung x entsprechend dem Pfeil 64 verschoben.

Gleichzeitig wird dadurch über den Seilzug 38 das Verriegelungsbauteil 58 aus der Durchgangsöffnung 59 gezogen, so dass die Rückenlehnen - Verstellvorrichtung 15 sich nach oben in z-Richtung entsprechend dem Pfeil 65 bewegen kann. Über die Feder 35 wird die Sperrvorrichtung 41 in die in den Fig. 1 und 2 gezeigte Ausgangslage 61 a zurückverschwenkt.

## Patentansprüche

1. Fahrzeug mit mindestens einem Rücksitz, wobei der jeweilige Rücksitz eine Sitzfläche und eine Rückenlehne aufweist, wobei der Rücksitz über eine Verstellvorrichtung durch Umklappen der Rückenlehne aus einer Sitzposition in eine Ladeposition und zurück verstellbar ist, wobei zwischen einem Bodenblech (7) einer Karosserie (8) und der Sitzfläche (4) eine Verriegelungsvorrichtung (33) vorgesehen ist, die die Sitzfläche (4) in der Sitzposition (5) verriegelt,
**dadurch gekennzeichnet, dass** durch eine Abwärtsbewegung des hinteren Endes (13) der Sitzfläche (4) des Sitzes (1) beim Umklappen der Rückenlehne (2) in die Ladeposition (25) über eine Sperrvorrichtung (41), die damit in eine Verriegelungsstellung (61b) gebracht wird, und so die Rückkehr des Sitzes (1) in die Sitzposition (5) verhindert, eine Entriegelung der Verriegelungsvorrichtung (33) erfolgt, so dass die Sitzfläche (4) in die Ladeposition (25) absenkbar ist, dass das Hochklappen der Rückenlehne (2) aus der Ladeposition (25) nach einem vorbestimmten Schwenkwinkel die Sitzfläche (4) über die Verriegelungsvorrichtung (33) wieder verriegelt und dass die Verriegelung der Sitzfläche (4) eine Entriegelung der zuvor in die Verriegelungsstellung gebrachten Sperrvorrichtung (41) bewirkt, so dass der Sitz (1) wieder in die Sitzposition (5) bewegbar ist.

2. Fahrzeug nach Anspruch 1,
**dadurch gekennzeichnet, dass** zwischen der Sperrvorrichtung (41) und der Verriegelungsvorrichtung (33) ein Betätigungselement (38) angeordnet ist, dass das Betätigungselement (38) beim Absenken der Sitzfläche (4) die Verriegelungsvorrichtung (33) um eine vorbestimmte Strecke x, aus der Verriegelungsposition (44) verschiebt und dass das Betätigungselement (38) die Sperrvorrichtung (41) bei der Aufwärtsbewegung des Sitzes (1) aus der Verriegelungsstellung (61b) bewegt.

3. Fahrzeug nach den Ansprüchen 1 oder 2,
**dadurch gekennzeichnet, dass** die Verriegelungsvorrichtung (33) einen Verriegelungshebel (32) aufweist, der mit seinem einen Ende (34) gelenkig an einem vorderen Ende (11) der Sitzfläche (4) angeordnet ist, dass eine Feder (35) vorgesehen ist, die den Verriegelungshebel (32) in die Verriegelungsposition (44) drückt, dass ein karosserieseitiges Ende (36) des Hebels (32) in einer Halterungsvorrichtung (37) in einer Führung (12a) verschiebbar angeordnet ist und dass die Halterungsvorrichtung (37) über das Betätigungselement (38) mit der Sperrvorrichtung (41) verbunden ist.

4. Fahrzeug nach einem der vorhergehenden Ansprüche, **dadurch gekennzeichnet, dass** bei einer Abwärtsbewegung der Rückenlehne (2) die Sperrvorrichtung (41) eine Verschiebung der Halterungsvorrichtung (37) in der Führung (12a) so bewirkt, dass zumindest das karosserieseitige Ende (36) des Hebels (32) aus der Verriegelungsposition (44) in eine Zwischenposition (45) verlagert wird, in der das Hebelende (36) über einen Anschlag der Führung (12a) vor einer Eintrittsöffnung (46) einer Führung (12b) zur Anlage kommt und dass bei einem weiteren Absenken der Sitzfläche (4) der Verriegelungshebel (32) in die Führung (12b) nach unten so weit verschoben wird, bis die Sitzfläche (4) die Ladeposition (25) erreicht hat.

5. Fahrzeug nach Anspruch 4,
**dadurch gekennzeichnet, dass** in der Führung (12b) eine Feder (47) angeordnet ist, die bei der Aufwärtsbewegung der Sitzfläche (4) das Herausfahren des Hebels (32) in die Zwischenstellung (45) in der Führung (12a) unterstützt.

6. Fahrzeug nach einem der vorhergehenden Ansprüche,
**dadurch gekennzeichnet, dass** das Betätigungselement (38) ein Seilzug ist, an dessen einem Ende (38a) die Halterungsvorrichtung (37) befestigt ist.

7. Fahrzeug nach einem der vorhergehenden Ansprüche,
**dadurch gekennzeichnet, dass** die Sperrvorrichtung (41) einen Anschlag oder dergleichen (55) aufweist, der bei der Abwärtsbewegung des Sitzes (1) mit einem am Sitz (1, 2, 4, 15) angeordneten Anschlag oder dergleichen (56) in Eingriff kommt, dass die Abwärtsbewegung des Anschlages (55) zum einen eine Lageveränderung des Betätigungselementes (38) und zum anderen eine Verschiebung eines Verriegelungsbauteiles (58) der Sperrvorrichtung (41) in eine Verriegelungsstellung (61 b) bewirkt, in der eine Aufwärtsbewegung des Sitzes (1) aus der Sitzposition (25) gesperrt ist.

8. Fahrzeug nach Anspruch 7,
**dadurch gekennzeichnet, dass** der Anschlag (55) der Sperrvorrichtung (41) an einem Ende (54) eines schwenkbaren Hebels (40) ausgebildet ist, dass an einem dazu gegenüberliegenden Ende (54b) des Hebels (40) das Ende (38b) des Betätigungselementes (38) befestigt ist, dass der Hebel (40) über einen Hebel (50) um ein Schwenklager (49) bewegbar ist, dass an einem zu dem Hebel (40) abgewandten Ende des Hebels (50) über ein Gelenk (52) ein Hebel (51) angeordnet ist, der in einer Führung (53) geführt ist und an dessen Ende (57) das Verriegelungsbauteil (58) ausgebildet ist.

9. Fahrzeug nach Anspruch 8,
**dadurch gekennzeichnet, dass** die bei der Abwärtsbewegung des Sitzes (1) bewirkte Schwenkbewegung der Sperrvorrichtung (41) das am Ende (57) des Hebels (51) angeordnete Verriegelungsbauteil (58) durch eine Durchgangsöffnung (59) schiebt, die an einem feststehenden Bauteil (21) ausgebildet ist und dass an dem feststehenden Bauteil (21) ein Verstellweg einer Verstellvorrichtung (15) vorgesehen ist, so dass eine Aufwärtsbewegung der Verstellvorrichtung (15) und damit des Sitzes (1) durch das im Verstellweg befindliche Verriegelungsbauteil (58) verhindert ist.

10. Fahrzeug nach einem der vorhergehenden Ansprüche,
**dadurch gekennzeichnet, dass** die Verstellvorrichtung (15) ein Getriebe ist, dass an dem feststehenden Bauteil (21) als Verstellweg eine Zahnstange ausgebildet ist und dass die Verstellvorrichtung (15) ein Zahnrad (19) aufweist, das mit der Zahnstange (21) in Eingriff steht.

11. Fahrzeug nach einem der vorhergehenden Ansprüche,
**dadurch gekennzeichnet, dass** die Verstellvorrichtung (15) eine Schwenk- oder Drehachse (17) aufweist, um die die Rückenlehne (2) in die Ladeposition (25) oder in die Sitzposition (5) verschwenkbar ist.

12. Fahrzeug nach einem der vorhergehenden Ansprüche,
**dadurch gekennzeichnet, dass** bei einer Verstellung des Sitzes (1) aus der Ladeposition (25) in die Sitzposition (5) die an der Sitzfläche (4) angeordnete Feder (35) der Verriegelungsvorrichtung (33) eine Verschiebung des unteren Endes (36) des Hebels (32) in die Verriegelungsposition (44) bewirkt und dadurch gleichzeitig über das Betätigungselement (38) die Sperrvorrichtung (41) aus der Verriegelungslage (61b) in die Ausgangslage (61a) zurückstellt.

## Claims

1. A vehicle with at least one back seat, wherein the seat has a seat surface and a back, wherein the seat is adjustable by an adjusting device from a sitting position into a loading position by tilting the back rest, wherein a locking device (33) which locks the seat surface (4) in the sitting position (5) is disposed between the seat surface (4) and a floor panel (7) of a car body (8),
**characterised in that** a downward movement of the rear end (13) of the seat surface (4) of the seat (1), when the back rest (2) is swung into the loading position (25) by a stop device (41) which is thus brought into a locking position (61 b) and thus prevents the seat (1) returning to the sitting position (5), unlocks the locking device (33) so that the seat surface (4) can be lowered into the loading position (25), the back rest (2) when swung up out of the loading position (25) through a set angle locks the surface (4) again via the locking device (33), and locking the seat surface (4) unlocks the stop device (41), previously brought into the locking position, so that the seat (1) can be moved back into the sitting position (5).

2. A vehicle according to claim 1,
**characterised in that** an actuating element (38) is disposed between the stop device (41) and the locking device (33), the actuating device (38) moves the locking device (33) through a set distance x₁ out of the locked position (44) when the seat surface (4) is lowered, and the actuating device (38) moves the stop device (41) out of the locked position (61 b) during the upward motion of the seat (1).

3. A vehicle according to claim 1 or claim 2,
**characterised in that** the locking device (33) comprises a locking lever (32), the end (34) of which is pivoted to a front end (11) of the seat surface (4), a spring (35) presses the lever (32) into the locked position (44), a car-body end (36) of the lever (32) is slidable in a retaining device (37) in a guide (12a), and the retaining device (37) is connected by the actuating element (38) to the stop device (41).

4. A vehicle according to any of the preceding claims, **characterised in that** during a downward movement of the back rest (2) the stop device (41) moves the retaining device (37) in the guide (12a) so that at least the car-body end (36) of the lever (32) is moved out of the locked position (44) into an intermediate position (45) in which the lever end (36), via a stop (12b) on the guide (12a) is brought in front of an inlet opening (46) of a guide (12b) and after a further downward movement of the seat surface (4) the locking lever (32) is moved downwards in the guide (12b) until the seat surface (4) reaches the loading position (25).

5. A vehicle according to claim 4,
**characterised in that** a spring (47) is disposed in the guide (12b) and during the upward movement of the seat surface (4) helps the lever (32) to move out into the intermediate position (45) in the guide (12a).

6. A vehicle according to any of the preceding claims,
**characterised in that** the actuating element (38) is a sheathed cable with the retaining device (37) fastened to one end (38a).

7. A vehicle according to any of the preceding claims,
**characterised in that** the stop device (41) has a stop or the like (55) which during a downward movement of the seat (1) engages a stop or the like (56) on the seat (1, 2, 4, 15) and that the downward movement of the top (55) on the one hand changes the position of the actuating element (38) and on the other hand moves a locking component (58) of the stop device (41) into a locked position (61b) in which an upward movement of the seat (1) out of the sitting position (25) is blocked.

8. A vehicle according to claim 7,
**characterised in that** the stop (55) on the stop device (41) is formed on one end (54) of a pivotable lever (40), the end (38b) of the actuating element (38) is fastened to an opposite end (54b) of the lever (40), the lever (40) is movable by a lever (50) around a swivel bearing (49), and a lever (51) guided in a guide (53) and with a locking component (58) formed on its end (57) is mounted via a joint (52) on an end of the lever (50) remote from the lever (40).

9. A vehicle according to claim 8,
**characterised in that** during the downward movement of the seat (1) the pivoting motion of the stop device (41) moves the locking component (58) disposed at the end (57) of the lever (51) through a passage opening (59) formed in a stationary component (21) and an adjustment path of an adjusting device (15) is provided on the stationary component (21) so that an upward movement of the adjusting device (15) and consequently of the seat (1) is prevented by the locking device (58) in the adjustment path.

10. A vehicle according to any of the preceding claims,
**characterised in that** the adjusting device (15) is a gear unit, an adjustment path in the shape of a rack is formed on the stationary component (21), and the adjusting device (15) comprises a gearwheel (19) which engages in the rack (21).

11. A vehicle according to any of the preceding claims,
**characterised in that** the adjusting device (15) has a swivel axis or axis of rotation (17) around which the back rest (2) can be swung into the loading position (25) or into the sitting position (5).

12. A vehicle according to any of the preceding claims,
**characterised in that** during a movement of the seat (1) out of the loading position (25) into the sitting position (5) the spring (35) of the locking device (33) disposed on the seat surface (4) moves the bottom end (36) of the lever (32) into the locking position (44) and thus simultaneously, via the actuating element (38), moves the stop device (41) out of the locking position (61b) and back into the starting position (61a).

## Revendications

1. Véhicule automobile avec au moins un siège arrière qui présente une surface d'assise et un dossier qu'un dispositif de réglage peut faire passer, par basculement, d'une position d'assise à une position de chargement et inversement, avec, entre la tôle de plancher (7) de la carrosserie (8) et la surface d'assise (4), un dispositif de verrouillage (33) qui verrouille la surface d'assise (4) dans la position d'assise (5),
**caractérisé en ce qu'**
un mouvement vers le bas, de l'extrémité arrière (13) de la surface d'assise (4) du siège (1), avec basculement du dossier (2) l'amenant en position de chargement (25) a pour effet, par l'intermédiaire d'un dispositif d'arrêt (41) qui est ainsi amené à une position de verrouillage (61b) empêchant le retour du siège (1) à la position d'assise (5), de déverrouiller le dispositif de verrouillage (33) de sorte que la surface d'assise (4) peut être abaissée en position de chargement, tandis que le relèvement du dossier (2) partant de la position de chargement (25), produit, après un angle de basculement prédéfini, à nouveau le verrouillage de la surface d'assise (4) par le dispositif de verrouillage (33), et ce verrouillage produit le déverrouillage du dispositif d'arrêt (41) amené auparavant en position de verrouillage, de sorte que le siège (1) peut revenir à sa position d'assise (5).

2. Véhicule selon la revendication 1,
**caractérisé en ce qu'**
entre le dispositif d'arrêt (41) et le dispositif de verrouillage (33) est disposé un organe d'actionnement (38) qui, lors de l'abaissement de la surface d'assise (4) fait coulisser le dispositif de verrouillage (33) d'une longueur prédéfinie (x₁) en partant de la position de verrouillage (44), cet organe d'actionnement (38) déplaçant le dispositif d'arrêt (41) quand le siège s'élève en partant de la position de verrouillage (61b).

3. Véhicule selon la revendication 1 ou 2,
**caractérisé en ce que**
- le dispositif de verrouillage (33) présente un levier de verrouillage (32), articulé par une extrémité (34) sur l'extrémité avant (11) de la surface d'assise (4),
- un ressort (35) pousse le levier de verrouillage (32) dans sa position de verrouillage (44),
- l'extrémité (36), située du côté de la carrosserie, du levier (32) peut coulisser dans un guide (12a) d'un dispositif de retenue (37), et
- l'élément d'actionnement (38) relie le dispositif de retenue (37) au dispositif d'arrêt (41).

4. Véhicule selon une des revendications précédentes,
**caractérisé en ce que**
quand le dossier (2) s'abaisse, le dispositif d'arrêt (41) fait coulisser le dispositif de retenue (37) dans le guide (12a) de manière qu'au moins l'extrémité (36), située du côté de la carrosserie, du levier (32) peut passer de sa position de verrouillage (44) à une position intermédiaire (45), dans laquelle l'extrémité (36) du levier (32) vient rencontrer une butée de guidage (12a) en avant d'une ouverture d'entrée (46) d'un guidage (12b), un autre abaissement de la surface d'assise (4) faisant coulisser vers le bas le levier de verrouillage (32) dans le guide (12b) jusqu'à ce que la surface d'assise (4) ait atteint la position de chargement (25).

5. Véhicule selon la revendication 4,
**caractérisé en ce que**
dans le guide (12b) est disposé un ressort (47) qui, lorsque la surface d'assise (4) s'élève, assiste dans le guide (12a) la sortie du levier (32) qui passe en position intermédiaire (45).

6. Véhicule selon l'une des revendications précédentes,
**caractérisé en ce que**
l'élément d'actionnement (38) est un câble de traction à une extrémité (38a) duquel est fixé le dispositif de retenue (37).

7. Véhicule selon l'une des revendications précédentes,
**caractérisé en ce que**
- le dispositif d'arrêt (41) présente une butée ou similaire (55) qui vient en prise, quand le siège (1) s'abaisse, avec une butée ou similaire (56) montée sur le siège (1, 2, 4, 15),
- le mouvement d'abaissement de la butée (55) produit d'une part une modification de la position de l'élément d'actionnement (38) et d'autre part un coulissement d'un composant de verrouillage (58) du dispositif d'arrêt (41), qui passe en position de verrouillage (61b) dans laquelle est empêchée une élévation du siège (1) partant de la position d'assise (25).

8. Véhicule selon la revendication 7,
**caractérisé en ce que**
- la butée (55) du dispositif d'arrêt (41) est réalisée sur une extrémité (54) d'un levier (40) pivotant, tandis que l'extrémité opposée (54b) du levier (40) est fixée à l'extrémité (38b) de l'élément d'actionnement (38),
- le levier (40) peut tourner dans un palier de basculement (49) par l'action d'un levier (50), et
- à l'extrémité, éloignée du levier (40), du levier (50) est monté par une articulation (52), un levier (51) passant dans un guide (53) et portant à son extrémité le composant de verrouillage (58).

9. Véhicule selon la revendication 8,
**caractérisé en ce que**
lors du mouvement de basculement du dispositif d'arrêt (41) produit par le mouvement d'abaissement du siège (1), le composant de verrouillage (58) disposé à l'extrémité (57) du levier (51) coulisse à travers l'ouverture de passage (58) réalisée dans un composant (21) fixe, sur lequel est prévu un parcours de réglage d'un dispositif de réglage (15) de sorte que le composant de verrouillage (58) qui se trouve sur le parcours de réglage empêche le mouvement vers le haut du dispositif de réglage (15) et donc du siège (1).

10. Véhicule selon l'une des revendications précédentes,
**caractérisé en ce que**
le dispositif de réglage (15) est un engrenage, une crémaillère étant prévue sur le composant fixe (21) en tant que parcours de réglage, et avec cette crémaillère (21) est en prise un pignon (19) qui présente le dispositif de réglage (15).

11. Véhicule selon l'une des revendications précédentes,
**caractérisé en ce que**
le dispositif de réglage (15) présente un axe de basculement ou de rotation (17) autour duquel peut basculer le dossier de siège (2) pour venir en position de chargement (25) ou en position d'assise (5).

12. Véhicule selon l'une des revendications précédentes,
**caractérisé en ce que**
lors du déplacement du siège (1) passant de la position de chargement (25) à la position d'assise (5), le ressort (35) disposé sur la portée d'assise (4) du dispositif de réglage (33) produit un coulissement de l'extrémité inférieure (36) du levier (32) l'amenant à la position de verrouillage (44) et ainsi en même temps l'élément d'actionnement (38) fait revenir le dispositif d'arrêt (41) de la position de verrouillage (61b) à la position initiale (61a) .
